# EUROPEAN PATENT APPLICATION

(11) **EP 2 222 018 A1**
(43) Date of publication of application: **25.08.2010**
(21) Application number: 09305172.0
(22) Date of filing: 24.02.2009
(51) Int. Cl.: H04L 12/12, H04L 12/10

(54) **A method of centralized ethernet network shutdown**

(71) Applicant: Alcatel Lucent, 75008 Paris (FR)
(72) Inventor: Wolff, Christophe, 67400, ILLKIRCH (FR)
(74) Representative: Sciaux, Edmond

(57) **Abstract**

A method is disclosed of centralized Power over Ethernet network shutdown, that comprises the steps of:
- sending (19) from a centralized management unit (1, 2) through said network a shutdown binary signal, a first value of which commands a shutdown, and the second value of which authorizes a restart;
- detecting (20) the value of said shutdown signal, in a network element;
- then shutting down (22, 24) at least some of the functions of said network element and propagating the shutdown signal, if the signal has its first value, or authorizing all the functions of said network element if the signal has its second value.

The shutdown signal can be constituted by a Power over Ethernet voltage usually used for remotely supplying power to network elements that can be remotely powered. The presence of a Power over Ethernet voltage commands a shutdown, and commands the propagation of a shutdown signal; whereas the absence of the Power over Ethernet voltage authorizes all the functions of said network element.

## Description

### BACKGROUND OF THE INVENTION

### Field of the invention

The present invention generally relates to Power over Ethernet (PoE) enabled Ethernet networks, i. e. Ethernet networks that can remotely power supply network elements. Generally, in a Power over Ethernet (PoE) enabled network, each switch is respectively powered by a local power supply unit linked to the mains, whereas each terminal is powered by a PoE voltage provided by the switch to which it is directly linked.
The power consumed by PoE network elements (terminals and switches) is increasing with the Ethernet speed increase, and it is consumed for 24 hours per day. However, in an Ethernet network, not all the network elements need to run all the time (for example at night). In order to save energy, it is desirable to reduce the power consumption when there is no need.

### Description of the prior art

Many solutions are implemented to lower the consumption in each element of an Ethernet network, such as:
* Shutting down some functions in the terminals or the switches (Shutting down backlight, reducing CPU clock frequencies, reducing Ethernet speed).
* Standard IEEE 802.3az, in preparation, permits to stop transmission when a link is idle, and so reduce the energy consumption in the physical link level components.
But all these solutions only enable a power reduction of 20% to 50% in each network element, because we assume that the network functions must stay available at all time.
A possible method to save energy could be to interrupt the powered by the mains, but this may lead to failures, or start-up sequence problems, because the switches generally must be restarted in the order where they are cascaded, if there is a cascade of switches. Besides, we may not shut down all the network elements because some terminals and some servers must stay constantly on, in particular those that are on the paths to IP phones that may be used for emergency calls.

The object of the invention is to propose a method for shutting down at least some network elements of a PoE network without switch failures, or start-up sequence problems, when restarting.

### SUMMARY OF THE INVENTION

The invention provides a method of shutting down at least some network elements of an Ethernet network, **characterized in that** it comprises the steps of:
- receiving, in a network element a first shutdown binary signal, a first value of which commands to shutdown a network element, and the second value of which authorizes to restart a network element;
- detecting the value of said shutdown signal;
- then shutting down at least some functions of said network element and propagating the shutdown to a downward network element by generating a second shutdown signal, if the first signal has its first value, or authorizing all the functions of said network element if the first signal has its second value.

This method enables to shut down at least some functions in some network elements without switch failures, or start-up sequence problems, when restarting, because the restart is triggered by a change of value of the shutdown signal, and this change propagates from a centralized management unit to the terminals along the cascade of switches, so the switches restart in the order of the cascade. This restart order prevents switch failures and start-up sequence problems.

According to a peculiar embodiment of the method, for a network element located at the top of a cascade of network elements according to the invention, the first shutdown signal is carried by an Ethernet frame.

According to another embodiment of the method, said first shutdown signal is constituted by a Power over Ethernet voltage usually used for remotely supplying power to network elements that can be remotely powered.

According to a preferred embodiment of the method, said second shutdown signal is constituted by a Power over Ethernet voltage usually used for remotely supplying power to network elements that can be remotely powered.

According to a preferred embodiment of the method, the first signal has its first value when a Power over Ethernet voltage is present; whereas the first signal has its second value when said Power over Ethernet voltage is absent.

According to a preferred embodiment of the method, for propagating a shutdown signal via a given port of a first network element directly linked to a second downward network element, it further comprises the steps of:
- determining whether a network element directly linked to a downlink port can be remotely shut down or not by the presence of a Power over Ethernet voltage, and:

- putting on a PoE voltage on this downlink port when a PoE voltage is received on an uplink, and putting off the PoE voltage on this downlink port when no PoE voltage is received on an uplink, if the second downward network element can be shut down by the presence of a PoE voltage,
- or putting off the PoE voltage on this downlink port, when a PoE voltage is received on an uplink, and putting on the PoE voltage on this downlink port, when no PoE voltage is received on an uplink, if the second downward network element cannot be remotely shut down by the presence of a PoE voltage.

According to another embodiment of the method, the first shutdown signal is carried by an optical carrier usually used for transmitting data from a first network element comprising an optical port to a second network element having an optical port. Preferably, the absence of a continuous optical carrier commands a shutdown of at least some functions of the second network element, and a propagation of the shutdown to a downward network element; whereas the presence of a continuous optical carrier authorizes all the functions of the second network element.

According to another embodiment of the method, it comprises the step of modulating an optical carrier with a modulating signal specific to the shutdown signal;
and in that the absence of this modulating signal, while the optical carrier is present, commands a shutdown of at least some functions of the second network element, and a propagation of the shutdown to a downward network element; whereas the presence of this modulating signal authorizes all the functions of the second network element.

According to a preferred embodiment of the method, for commanding a shutdown of at least some functions of a network element, it further comprises the steps of:
- checking flags that have been previously assigned respectively to the ports of said network element, the value of a flag authorizing or forbidding the shutdown of this port, and the propagation of the shutdown via this port,
- and then executing the shutting down and the propagation of the shutdown only for each port that has been assigned a flag authorizing the shutdown of this port, when this network element detects the presence of the first value of said first shutdown signal.

According to a preferred embodiment of the method, it further comprises the steps of:
- checking whether all the ports of a same network element are going to be shut down,
- and then shutting down all the functions of this network element if all the ports of this network element are going to be shut down.

The invention also provides a network element adapted to implement the method according to the invention.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following will be with reference to the accompanying drawings:
- Figure 1 represents a first example of Ethernet network comprising switches that are all designed according to the invention.
- Figure 2 represents a flow chart of one embodiment of the method according to the invention.
- Figure 3 represents a second example of Ethernet network comprising switches according to the invention, and switches that are not according to the invention.
- Figure 4 schematically represents a first embodiment of an Ethernet switch according to the invention, with an electrical uplink.
- Figure 5 schematically represents a second embodiment of an Ethernet switch according to the invention, with an optical uplink.

### DETAILED DESCRIPTION OF THE PREFERRED EMBODIMENTS

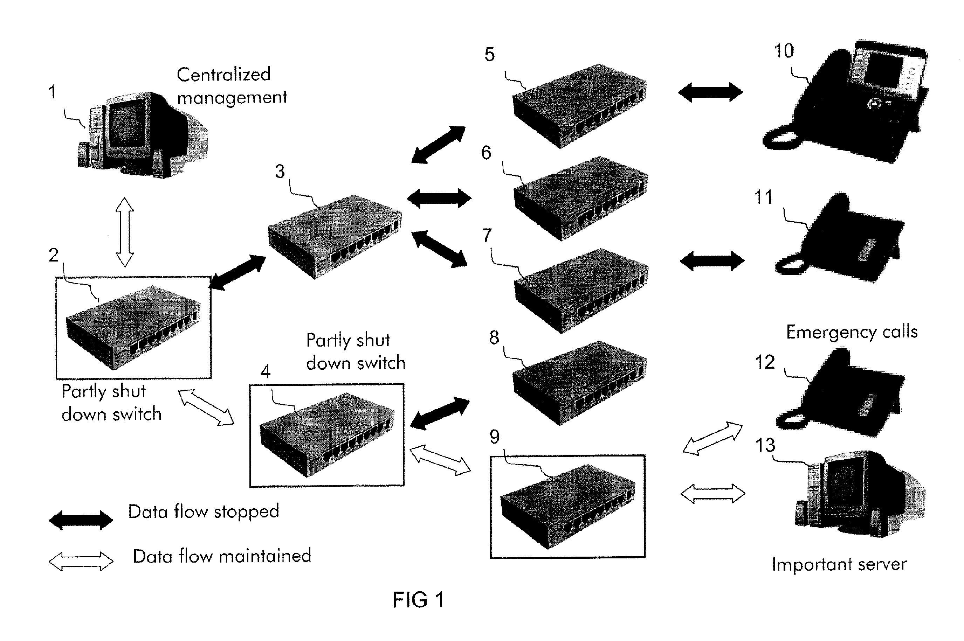

A first example of Ethernet network, comprising switches that are all designed according to the invention, is represented on figure 1, and comprises:
- A centralized management unit 1 that can be a personal computer,
- a first switching tier comprising a single Ethernet switch 2,
- a second switching tier comprising two Ethernet switches 3-4 that are linked to the switch 2,
- a third switching tier comprising four Ethernet switches 5-9 wherein switches 5-7 are linked to the switch 3, and switches 8, 9 are linked to switch 4,
- and exemplary terminals 10-13, wherein:
   -- terminals 10-11 are IP phones linked to the switches 5-7 and are used for casual calls,
   -- a terminal 12 is an IP phone is linked to switch 9, and is used for emergency calls,
   -- and a terminal 13 is linked to switch 9, and is an important server.

When a network element (in particular a switch or a terminal) is connected to a PoE switch, a classical discovery procedure is automatically run to determine the type of element and the power class of this element. This procedure enables to distinguish several types of network elements:
- Network elements that cannot be remotely powered and cannot be shut down by the presence of a PoE voltage, for instance a personal computer equipped with a classical Ethernet adapter that cannot bear a PoE voltage.
- Network elements that cannot be remotely powered but can be shut down by the presence of a PoE voltage, for instance a switch designed according to the invention, or personal computer equipped with a local power supply and an Ethernet adapter specifically designed to apply the shutdown method according to the invention.
- Network elements that can be remotely powered and remotely shut down by the absence of a PoE voltage, for instance an IP phone that is powered by a PoE voltage, and that can be shutdown by remotely interrupting this PoE voltage.

In this example, the terminals 10-13 have been previously identified by the switches 5-9 respectively, during discovery procedures respectively run when these terminals were linked to these switches 5-9:
- Terminals 10-12 have been identified as terminals that can be remotely powered and remotely shut down by the absence of a PoE voltage, because they do not comprise any local power supply.
- Terminal 13 has been identified as a terminal that cannot be remotely powered and cannot be shut down by the presence of a PoE voltage, because it is equipped with a local power supply and a classical Ethernet adapter. So it must never receive any PoE voltage.

In this example, the network must not be completely shut down since the terminal 12 is used for emergency calls, and the terminal 13 is an important server. For distinguishing ports that need permanent data connection, flags have been set in the switches 2-9, by a network administrator. Each port has a flag, the value of which authorizes or forbids the shutdown of this port, and the propagation of the shutdown. In this example, the switches 2, 4, 9 must not be completely shut down because they are on the paths used for calls to the terminal 12 that is an IP phone used for emergency calls, and to the terminal 13 that is an important server.

For running, the terminals 10, 11, 12 receive PoE voltages respectively supplied by the switches 5-9 to which they are respectively linked. For these terminals 10, 11, 12, the PoE voltages play their classical roles of power supply. When a shutdown signal is received by the switches 5-8, they interrupt the PoE voltages respectively supplied to these terminals 10, 11, 12 in order to shut them down.

It is a first way of propagating the shutdown to a downward network element. It is only used for the terminals that are remotely powered.
There is a second way consisting in supplying a PoE voltage to a downward network element. It is only used for the network elements that can be shutdown by supplying a PoE voltage, such as the switches 2-9 that are designed according to the invention.
For this reason, a switch according to the invention must propagate the shutdown signal in different ways according to the type of network element directly linked downwards.
All the Ethernet switches 2-9 are powered respectively by local power supply units (not represented). They are all PoE enabled, i. e. they can provide a PoE voltage to downward network elements, either as a shutdown signal or as a power supply; and they are all adapted to implement the method according to the invention, i. e. they apply the following rules:
- If the downward network element cannot be remotely powered and cannot be shut down by the presence of a PoE voltage, the switch cannot propagate the shutdown signal. It never supplies a Power over Ethernet voltage, to prevent any damage to this terminal that may be incompatible with a PoE voltage.
- If the downward network element cannot be remotely powered but can be shut down by the presence of a PoE voltage, the switch propagates the shutdown signal by supplying a Power over Ethernet voltage to this network element. The absence of a PoE voltage commands a restart.
- If the downward network element can be remotely powered by the presence of a PoE voltage, and remotely shut down by the absence of a PoE voltage, the switch propagates the shutdown signal by interrupting a Power over Ethernet voltage to this downward network element. The presence of a PoE voltage commands a restart.

In addition, the switch 2, which is at the top of a cascade of switches designed according to the invention, comprises means for receiving a shutdown order from the centralized management unit 1, this order being carried by an Ethernet frame. When the switch 2 receives this order, it propagates a shutdown signal by putting a PoE voltage on the ports that are flagged so that a shutdown is authorized. A first port, linked to switch 3, is flagged so that a shutdown is authorized. A second port, linked to switch 4, is flagged so that a shutdown is forbidden. The switch 2 has detected that these ports are respectively linked to two network elements that cannot be remotely powered but can be shut down by the presence of a PoE voltage, during a previous discovery procedure. Then the switch 2 executes a shutdown by:
- shutting down the port link to the switch 3,
- keeping alive the port linked to switch 4,
- and supplying PoE voltages respectively on both ports, in order to propagate the shutdown signal along the cascade of switches up to the terminals.
   Then the switch 2 stays running in a low power mode adapted to the number of ports staying alive. The PoE voltages are kept present.

Each switch 2-9 comprises circuits for shutting down a port by putting off the data transmitter and the data receiver of this port, and however propagating a shutdown. These circuits can propagate the shutdown in two ways:
- either by supplying a PoE voltage to the downward network element, if this network element cannot be remotely powered but can be shut down by the presence of a PoE voltage;
- or by supplying no PoE voltage, if this network element can be remotely powered by the presence of a PoE voltage, and remotely shut down by the absence of a PoE voltage.

Each of these switches 2-9 further comprises:
- means for checking whether all the ports of said network element are going to be shut down,
- and means for shutting down all the functions of said network element if all the ports of a said network element are going to be shut down.
   Then the power consumption is very low.

Each switch monitors its uplink connection for detecting a PoE voltage. This can be done by a simple analog circuitry, independent of the Physical Ethernet Layer circuit.
If a PoE voltage is set on the uplink port of a switch 2-9, it means that the shutdown is initiated. By this way, we keep the compatibility with non PoE switches, i.e. if a switch according to the invention is linked to the downlink of a non PoE switch, the shutdown function is never activated since it never receives any PoE voltage. So the switch according to the invention can run normally, and the shutdown process only concerns this switch and others downwards.

When the switch 4 receives a PoE voltage from the switch 2, on its uplink port, it shuts down all its ports that have a flags authorizing to shutdown, and it puts PoE voltages on the ports that are linked to a network element that can be shut down by a PoE voltage, for propagating the shutdown. This is the case of the port linked to switch 8.
The switch 4 keeps alive the ports that have respective flags indicating that they must never be shut down and must not propagate the shutdown. This is the case of the port linked to the switch 9. The switch 4 stays running in a low power mode adapted to the number of ports staying alive.

When the switch 8 receives a PoE voltage from the switch 4, on its uplink port, the switch 8 shuts down all its ports, and sets PoE voltages on all its ports that are linked to a network element that can be shut down by a PoE voltage, since there is no port flagged with a flag forbidding the shutdown. When the switch 8 detects that all its ports are going to be shut down, it shuts down all its functions. Then it stays running with the minimal functions that are needed to supply the PoE voltages and for restarting later. So it consumes a very low power.

The switch 9 does not receive any PoE voltage from the switch 4, because its uplink port is linked to a port, of the switch 4, that is kept on, and without propagating any shutdown. So the switch 9 keeps all its ports on. It does not supply any PoE voltage on its downlink ports that are linked to nothing. But it supplies PoE voltages respectively to the ports where terminals 12-13 are linked and need a remote power supply. The terminals 12-13 have been previously identified by the switch 9 during a discovery procedure respectively run when each terminal has been linked to the switch 9.
The terminal 12 receives the PoE voltage supplied by the switch 9, and it uses it classically as a source of energy because it does not comprise any other power supply, in this example. The terminal 13 does not receive any PoE voltage supplied by the switch because it has been previously identified as a terminal that does not need a remote power supply.

The switch 3 receives, on its uplink, a PoE voltage from the switch 2. In the switch 3, all ports are flagged so that they can be shutdown, and their respective PoE voltages can be put on, because they are linked to network elements that cannot be remotely powered but can be shut down by the presence of a PoE voltage, as identified during a previous discovery procedure.

The switch 5 receives, on its uplink, a PoE voltage from the switch 3. In the switch 5, all ports are flagged so that they can be shutdown. So it shuts down all its ports. It does not supply any PoE voltage on its downlink ports that are linked to IP phones, such as the exemplary IP phone 10, because they have been identified as network elements that can be remotely powered and remotely shut down by the absence of a PoE voltage. These terminals have been previously identified by the switch 5 during discovery procedures respectively run when each terminal has been linked to the switch 5.
The status is the same in switches 6-8.

For wake-up, a wake up command is issued by the management unit 1 in an Ethernet frame sent to the switch 2. The switch 2 restarts its functions that were shut down. A discovery procedure is run on the ports that were shut down and that are respectively linked to downward network elements. It is the case of the port linked to the switch 3.
The switch 2 detects again the presence of the switch 3, and determines that it cannot be remotely powered but can be remotely shut down by the presence of a PoE voltage. It already knows the presence and the type of the switch 4.
The switch 2 removes the PoE voltage from the port linked to the switch 3. The absence of PoE voltage is detected by the voltage detection means monitoring the uplink connection of the switch 3. Then the switch 3 restarts its functions that were shut down. A discovery procedure is run on its downlink ports that were shut down and that are respectively linked to downward network elements. It detects the switches 5-7 again. Then the switch 3 removes the PoE voltages from all its ports.
Then the absence of PoE voltage is detected by the respective voltage detection means monitoring the uplinks of the switches 5-7. They restart. A discovery procedure is run on the ports that were shut down and that are respectively linked to downward network elements. They detect again the terminals 10-11 that need a remote power supply. Then the switches 5-7 put PoE voltages on the ports linked to terminals 10-11.
Then a wakeup process occurs similarly in the switch 4 and then in the switch 9.

So the wake-up is automatically propagated from the centralized management unit 1 to the switches 5-9. Startups are sequentially executed in the switches 1-9 in the order of the cascade, thus avoiding switch failures, or start-up sequence problems.

In a variant, the centralized management unit 1 could be integrated to the switch 2 at the top of the cascade.

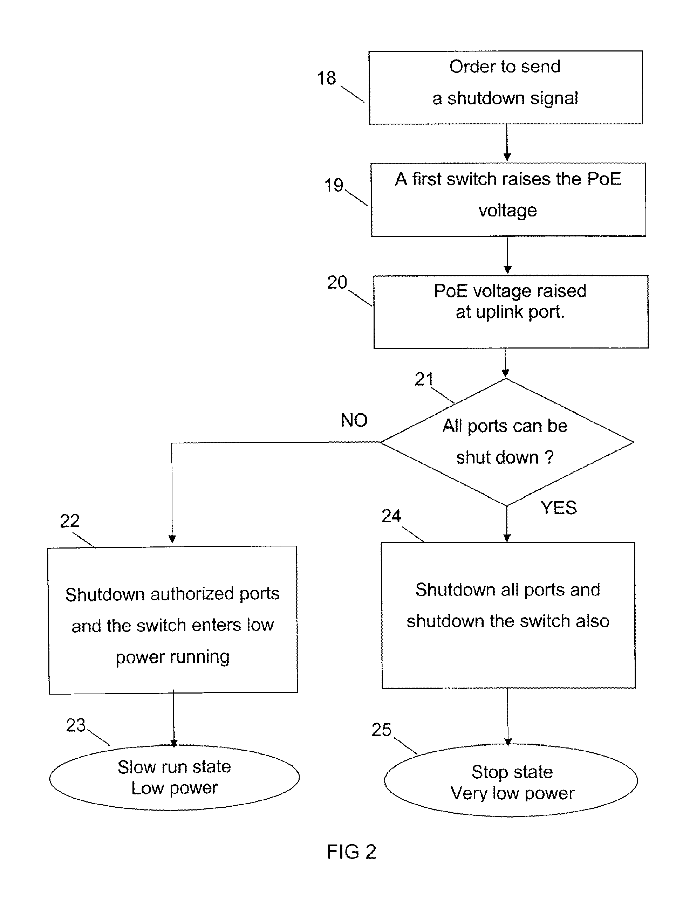

**Figure 2** represents a flow chart of one embodiment of the method according to the invention:
Step 18: A centralized management unit 1 sends, to a first switch 2, an order to propagate the shutdown signal, this switch 2 being at the top of a cascade comprising at least two consecutive switches that are designed for implementing the method according to the invention.
Step 19: The first switch 2 supplies the PoE voltage on all its downlink ports that are respectively linked to PoE switches.
Step 20: A considered switch, switch 9 for instance, receives the shutdown signal constituted by the PoE voltage, on its uplink port.
Step 21: Then the considered switch checks whether all its ports may be shut down, by checking the respective flags. If No, it goes to step 22. If Yes, it goes to step 24.
Step 22: It shut downs the authorized ports only. In addition, the switch enters a low power running state where the power consumption is reduced.
Step 23: Then the switch continues to run in a slow run state, consuming low power.
Step 24: The switch shut downs all its ports and it shuts down itself. All functions are stopped, except the propagating of a shutdown signal constituted by a PoE voltage if another PoE switch is linked downwards, and a PoE voltage loss detection that is necessary for restarting.
Step 25: Then the switch remains in a stop state consuming very low power.

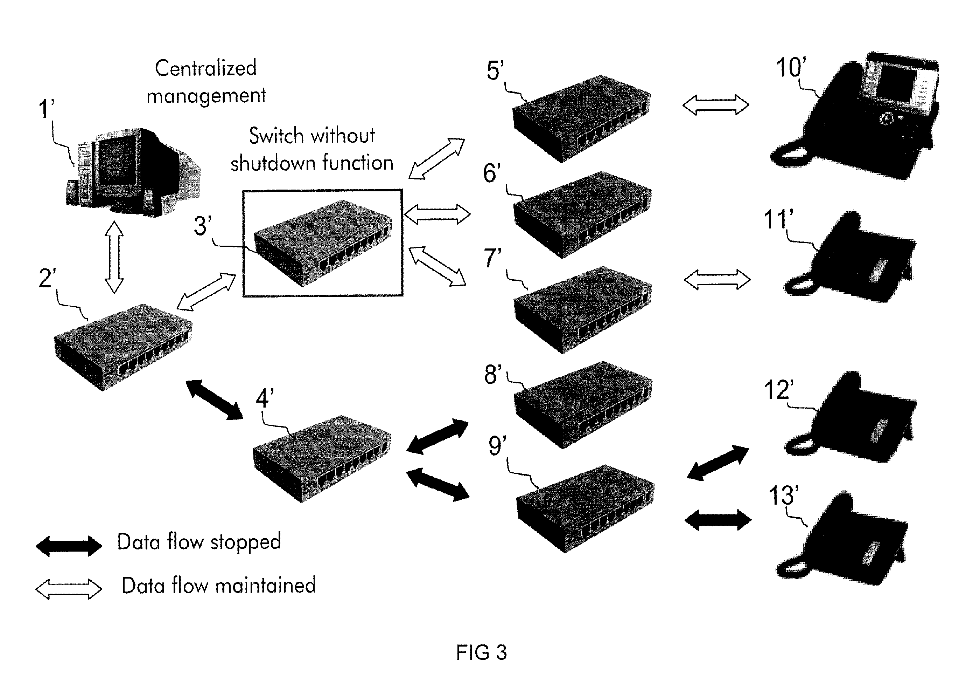

**Figure 3** represents a second example of Ethernet network comprising switches according to the invention, and switches that are not according to the invention. It illustrates the case where classical PoE switches are mixed with PoE switches designed according to the invention. The classical PoE switches are designed to permanently provide a PoE voltage to the network element linked downwards (provided they are identified as needing to be remotely powered), so they cannot propagate a shutdown signal that must take two values: Preferably one is constituted by the presence of a PoE voltage, and the other is constituted by the absence of the PoE voltage.

This second example comprises:
- A centralized management unit 1';
- a first switching tier comprising a single PoE switch 2' according to the invention, i. e. with the shutdown function;
- a second switching tier comprising two PoE switches 3'-4', wherein switch 4' is designed according to the invention, and wherein switch 3' is a classical PoE switch, i. e. without the shutdown function;
- a third switching tier comprising four switches 5'-9', wherein switches 8'-9' are designed according to the invention, and are linked to the switch 2'; and wherein switches 5', 6', 7' are classical PoE switches linked to the switch 3';
- and exemplary terminals 10'-13', that are IP phones, all used for casual calls, so all may be shut down during certain periods (at night for instance) without drawbacks.

The switches 3', 5', 6', 7', are never shut down since they cannot detect the presence of a PoE voltage on their respective uplinks. PoE voltages are activated permanently on the respective downlinks of the switches 3'-9' because they are classical PoE enabled switches that have detected, during discovery procedures, the presence of terminals 10'-13' that need remote power supply. So the terminals 10'-11' are never shutdown.

On the other hand, the network elements 2', 4', 8', 9', 12'-13' may be shut down at least partially because they comprise means for implementing the method according to the invention. In particular, they can propagate the shutdown from one network element to another downwards, up to switches 8', 9', and these later can propagate the shutdown to the terminals 12', 13' by interrupting the PoE voltages that they supply to these terminals, as explained above for figure 1.

This shows that the switches according to the invention may be mixed with classical Poe switches in a same PoE network.

In other examples of network, the top of the cascade of switches according to the invention may not coincide with the top of the cascade of switches. For instance, if switch 2' was a classical switch, the method according to the invention would be applied by the switches 4', 8', 9' only. In such a case, the centralized management unit 1' would address the shutdown/restart order to the switch 4' instead of the switch 2'.

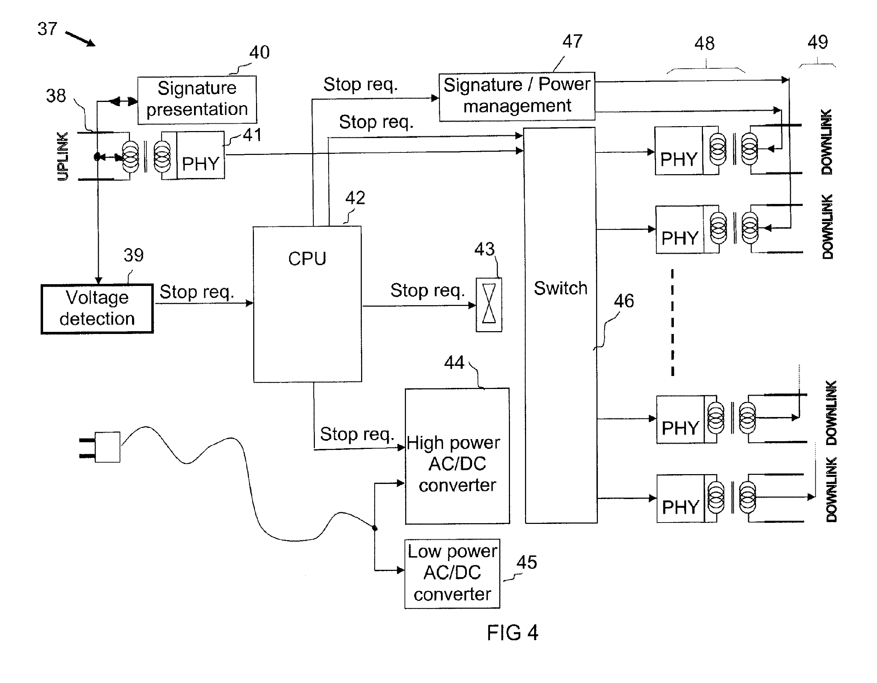

**Figure 4** schematically represents a first embodiment 37 of an Ethernet switch according to the invention, with an electrical uplink 38. It comprises:
- A classical PoE physical layer circuit 41 constituting a port linked to the electrical Ethernet uplink 38. It comprises an access supplying a PoE voltage received via the uplink, when a shutdown signal is applied.
- A circuit 40 for presenting a signature to an upward switch. This signature indicates the type of this network element (It cannot be remotely power supplied but can be remotely shut down). It is linked to the access of the classical PoE physical layer circuit 41.
- A PoE voltage detection circuit 39.
- A central processing unit 42.
- A fan 43.
- A high power AC/DC converter 44 linked to the mains. It is the main power supply of the switch 37, and it can be put off completely when the switch 37 is shut down.
- A low power AC/DC converter 45 linked to the mains. It is always on. When all the functions of the switch 37 are shut down, it supplies the low power necessary for detecting the change of value of the shutdown signal, for supplying PoE voltages on the downlink ports in order to propagate the shutdown signal, and for restarting the switch 37.
- A switch 46 forwarding Ethernet frames from one port to another.
- A signature and power management unit 47 for detecting the presence of a network element linked to a downlink, and for identifying the type of this network element (in particular identifying its power class).
- A plurality of classical PoE physical layer circuits 48 constituting ports respectively linked to downlinks 49; each of these circuits 48 comprising an output that can be controlled to supply or not a PoE voltage on a downlink.

The central processing unit 42 has an input for receiving a Stop Request signal supplied by the PoE voltage detection circuit 39. For shutting down at least some functions of the switch 37, the central processing unit 42 has outputs respectively linked to inputs of:
- the signature and power management unit 47,
- the switch 46,
- the fan 43,
- the high power AC/DC converter 44,
- the classical PoE physical layer circuits 41 and 48 (by links not represented on the figure).

The central processing unit 42 executes:
- software means for receiving a Stop Request signal supplied by the PoE voltage detection unit 39 when it detects a shutdown signal constituted by a PoE voltage, on the uplink 38,
- and software means for shutting down at least some of the functions of this switch 37 when this Stop Request signal is received.

Preferably, the central processing unit 42 executes:
- Software means for checking flags that have been previously assigned respectively to the ports of said network element, the value of a flag authorizing or forbidding the shutdown of this port, and the propagation of the shutdown via this port.
- Software means for executing the shutting down and the propagation of the shutdown only for each port that has been assigned a flag authorizing the shutdown of this port, when this network element detects the presence of the first value of said shutdown signal. These flags are part of configuration data supplied by a network administrator.
- Software means collaborating with the signature and power management circuit 47 for determining whether a PoE voltage must be sent or not to a network element linked to a downlink port 48.They comprise:
   -- software means for determining whether a network element directly linked to a downlink port can be remotely shut down or not, by the presence of a Power over Ethernet voltage,
   -- and software means for:
      --- putting on a PoE voltage on this downlink port when a PoE voltage is received on the uplink 38, and putting off the PoE voltage on this downlink port when no PoE voltage is received on the uplink 38, if the network element linked to this downlink port can be shut down by the presence of a PoE voltage,
      --- putting off the PoE voltage on this downlink port, when a PoE voltage is received on the uplink 38, and putting on the PoE voltage on this downlink port, when no PoE voltage is received on the uplink 38, if the network element linked to this downlink port cannot be remotely shut down by the presence of a PoE voltage.

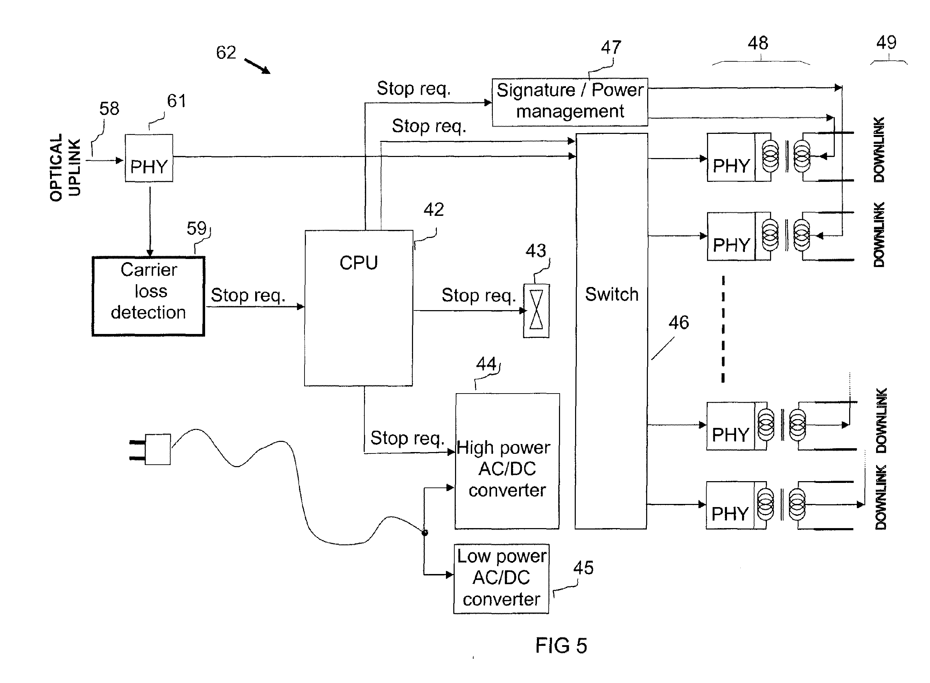

**Figure 5** schematically represents a second embodiment 62 of an Ethernet switch according to the invention, with an optical uplink. It differs of the first embodiment 37 by the fact that:
- The electrical Ethernet uplink 38 is replaced by an optical uplink 58.
- The classical electrical PoE physical layer circuit 41 is replaced by a classical optical physical layer circuit 61 constituting the port linked to the uplink 58. It comprises an output supplying the received optical carrier, if any.
- The PoE voltage detection circuit 39 is replaced by a carrier loss detection unit 59 comprising means for supplying, to a central processing unit 42, a Stop Request signal for shutting down at least some functions of the switch 62 if a continuous optical carrier is absent, and authorizing all the functions of the network element if a continuous optical carrier is present.

The other components are unchanged.
A switch may have an optical uplink port and an electrical uplink port. A local selector enables to choose the source of the first shutdown signal (electrical, or optical, or data in an Ethernet frame).

In a third embodiment, the carrier loss detection unit 59 could be replaced by a modulating signal loss detection unit, comprising a circuit for receiving an optical carrier modulated by a modulating signal specific to the shut down signal. This unit is adapted for supplying a Stop Request signal to the central processing unit 42 if the modulating signal specific to the shut down signal is absent, while the optical carrier is present; and for canceling the Stop Request signal, i. e. authorizing all the functions of the switch, if the modulating signal specific to the shut down signal, is present. This prevents cascading a shutdown in case of a switch or an optical link failure.
An example of modulation method could be a fixed pattern of bits modulating the amplitude of the optical carrier.

The invention can be applied to a fully optical switch, i. e. comprising an optical uplink and optical downlinks (or any combination of Optical/Ethernet links). It differs of the second embodiment 62 by the fact that the electrical Ethernet downlinks 49 are replaced by optical downlinks, each downlink port comprising an optical physical layer circuit that comprises an optical source supplying a modulated optical carrier. In a possible embodiment, a Stop Request signal interrupts the carrier if a shutdown signal must be propagated. Major benefits of the invention:
- No special chip for the physical layer. So easy adaptation of any design in a short time range. Keeping choice on physical layer chip market.
- No need of leaving the central processing unit or physical layer running for wake-up (no need of data analysis, except for the switch at the top of the cascade, this switch receiving a shutdown/restart Ethernet frame).
- Simple to install, simple to use.
- Compatible with existing material (PoE enabled).

A typical switch consumption is 2W/port, and for an idle IP-Phone, 5W. An installation of 1000 terminals needs for example 22 switches, consuming 7 kW when in normal operation. During long period of inactivity (nights), this can be reduced at best to 4.5kW with the standard 802.3az (36% gain), and to 0.1 kW with the method according to the invention (99% gain).
Known waking-up on a digital message needs digital components to remain running. With the method according to the invention, only simple and very low power analog components can be used. There is no need of specific components, so it can be applied with no delay, or it can be later integrated to the Ethernet physical layer components, in a second step.

For devices that do not use remote powering (like personal computers), the embedded Ethernet adapter could also be modified so as to detect the PoE voltage and shut down the device. It also implies a signature. In an embodiment, such a device is declared as a PoE class 1 device, and a negotiation is made by means of the Link Layer Discovery Protocol (LLDP), with a "0 watt supply" agreement. This "0 watt supply" agreement leads the switch port to supply a PoE voltages, even if the device does not consume any power (The PoE voltage is only used as a shutdown signal).

Considering redundancy topologies that use for example two uplinks, we can also apply the same shutdown method, either by combining the two shutdown first signals or by assigning one master link that will provide the first shutdown signal. Care must be taken to avoid inter-locking by connecting a downlink port to the uplink of a switch that is higher in the switch tree. The usage of a master uplink connection or the usage of flags that disable shutdown, port by port, is a solution to this problem linked to network topologies.

## Claims

1. A method of shutting down at least some network elements of an Ethernet network, **characterized in that** it comprises the steps of:
- receiving (20), in a network element (2-9) a first shutdown binary signal, a first value of which commands to shutdown a network element, and the second value of which authorizes to restart a network element;
- detecting (20) the value of said shutdown signal;
- then shutting down (22, 24) at least some functions of said network element and propagating the shutdown to a downward network element by generating a second shutdown signal, if the first signal has its first value, or authorizing all the functions of said network element if the first signal has its second value.

2. A method according to claim 1, for a network element located at the top of a cascade of network elements according to the invention, **characterized in that** said first shutdown signal is carried by an Ethernet frame.

3. A method according to claim 1, **characterized in that** said first shutdown signal is constituted by a Power over Ethernet voltage usually used for remotely supplying power to network elements that can be remotely powered.

4. A method according to claim 3, **characterized in that** said second shutdown signal is constituted by a Power over Ethernet voltage usually used for remotely supplying power to network elements that can be remotely powered.

5. A method according to claim 3, **characterized in that** the first signal has its first value when a Power over Ethernet voltage is present; whereas the first signal has its second value when said Power over Ethernet voltage is absent.

6. A method according to claim 5, **characterized in that,** for propagating a shutdown signal via a given port of a first network element directly linked to a second downward network element, it further comprises the steps of :
- determining whether a network element directly linked to a downlink port can be remotely shut down or not, by the presence of a Power over Ethernet voltage, and:
- putting on a PoE voltage on this downlink port when a PoE voltage is received on an uplink (38), and putting off the PoE voltage on this downlink port when no PoE voltage is received on an uplink (38), if the second downward network element can be shut down by the presence of a PoE voltage,
- or putting off the PoE voltage on this downlink port, when a PoE voltage is received on an uplink (38), and putting on the PoE voltage on this downlink port, when no PoE voltage is received on an uplink (38), if the second downward network element cannot be remotely shut down by the presence of a PoE voltage.

7. A method according to claim 1, **characterized in that** said first shutdown signal is carried by an optical carrier usually used for transmitting data from a first network element comprising an optical port to a second network element having an optical port.

8. A method according to claim 7, **characterized in that** the absence of a continuous optical carrier commands a shutdown of at least some functions of the second network element, and a propagation of the shutdown to a downward network element; whereas the presence of a continuous optical carrier authorizes all the functions of the second network element.

9. A method according to claim 7, **characterized in that** it further comprises the step of modulating the optical carrier with a modulating signal specific to the shutdown signal;
and **in that** the absence of this modulating signal, while the optical carrier is present, commands a shutdown of at least some functions of the second network element, and a propagation of the shutdown to a downward network element; whereas the presence of this modulating signal authorizes all the functions of the second network element.

10. A method according to claim 1, **characterized in that**, for commanding a shutdown of at least some functions of a network element, it further comprises the steps of:
- checking flags that have been previously assigned respectively to the ports of said network element, the value of a flag authorizing or forbidding the shutdown of this port, and the propagation of the shutdown via this port,
- and then executing the shutting down (22) and the propagation of the shutdown only for each port that has been assigned a flag authorizing the shutdown of this port, when this network element detects the presence of the first value of said first shutdown signal.

11. A method according to claim 10, **characterized in that** it further comprises the steps of:
- checking whether all the ports of a same network element are going to be shut down,
- and then shutting down all the functions of this network element if all the ports of this network element are going to be shut down.

12. A network element (37, 62) **characterized in that** it comprises:
- means (41; 61) for receiving, through an Ethernet network, a first binary shutdown signal,
- means (39; 59) for detecting the value of said first shutdown signal,
- means (39, 42; 59 42) for shutting down at least some functions of said network element and propagating the shutdown to a downward network element by generating a second shutdown signal, if the first shutdown signal has its first value,
- and means (39, 42; 59 42) for authorizing all the functions of said network element if the first shutdown signal has its second value.

13. A network element (37) according to claim 12, **characterized in that** said means for receiving a first shutdown signal comprise means for receiving an Ethernet frame, on an uplink (38).

14. A network element (37) according to claim 12, **characterized in that** said means for receiving a first shutdown signal comprise means for receiving, on an uplink (38), a Power over Ethernet voltage usually used for remotely supplying power to network elements that can be remotely powered.

15. A network element (62) according to claim 12, **characterized in that** said means (39, 42; 59 42) for propagating the shutdown to a downward network element comprise means (47) for generating a Power over Ethernet voltage usually used for remotely supplying power to network elements that can be remotely powered.

16. A network element (62) according to claim 12, **characterized in that** said means (39) for shutting down at least some functions of said network element and propagating the shutdown are activated if the Power over Ethernet voltage is present on said uplink,
and **in that** the means for authorizing all the functions of the network element are activated if the Power over Ethernet voltage is absent on said uplink.

17. A network element according to claim 16, **characterized in that** the means (47) for propagating the shutdown comprise:
- means for determining whether a network element directly linked to a downlink port can be remotely shut down or not, by the presence of a Power over Ethernet voltage,
- and means for:
-- putting on a PoE voltage on this downlink port when a PoE voltage is received on an uplink (38), and putting off the PoE voltage on this downlink port when no PoE voltage is received on an uplink (38), if the network element linked to this downlink port can be shut down by the presence of a PoE voltage,
-- putting off the PoE voltage on this downlink port, when a PoE voltage is received on an uplink (38), and putting on the PoE voltage on this downlink port, when no PoE voltage is received on an uplink (38), if the network element linked to this downlink port cannot be remotely shut down by the presence of a PoE voltage.

18. A network element (62) according to claim 12, **characterized in that** said means (61) for receiving a first shutdown signal comprise means for receiving an optical carrier usually used for transmitting data from an uplink network element to said network element.

19. A network element (62) according to claim 18, **characterized in that** said means (59, 42) for shutting down at least some functions of said network element and propagating the shutdown are activated if a continuous optical carrier is absent,
and **in that** the means for authorizing all the functions of the network element are activated if a continuous optical carrier is present.

20. A network element according to claim 18, **characterized in that** said means (59) for receiving a first shutdown signal comprise means for receiving an optical carrier modulated by a modulating signal specific to the shut down signal,
and **in that** said means (59, 42 for shutting down at least some functions of said network element and propagating the shutdown are activated if the modulating signal is absent, while the optical carrier is present,
and **in that** the means for authorizing all the functions of the network element are activated if the modulating signal is present.

21. A network element according to claim 12, **characterized in that** it further comprises:
- means (42) for checking flags that have been previously assigned respectively to the ports of said network element, the value of a flag authorizing or forbidding the shutdown of this port, and the propagation of the shutdown via this port,
- and means (42) for executing the shutting down and the propagation of the shutdown only for each port that has been assigned a flag authorizing the shutdown of this port, when this network element detects the presence of the first value of said shutdown signal.

22. A network element according to claim 21, **characterized in that** it further comprises:
- means (42; 52) for checking whether all the ports of said network element are going to be shut down,
- and means (42; 52) for shutting down all the functions of said network element if all the ports of a said network element are going to be shut down.

## Amended claims

### Amended claims in accordance with Rule 137(2) EPC.

**1.** A method of shutting down at least some network elements of an Ethernet network, comprising the steps of:
- receiving (20), in a network element (2-9) a first shutdown binary signal, a first value of which commands to shutdown a network element, and the second value of which authorizes to restart a network element;
- detecting (20) the value of said shutdown signal;
- then propagating a shutdown to a downward network element by generating a second shutdown signal, if the first signal has its first value; **characterized in that**, for commanding a shutdown of at least some functions of said network element, it further comprises the steps of:
- checking flags that have been previously assigned respectively to the ports of said network element, the value of a flag authorizing or forbidding the shutdown of this port, and the propagation of the shutdown via this port,
- and then executing the shutting down (22) and the propagation of the shutdown only for each port that has been assigned a flag authorizing the shutdown of this port, when this network element detects the presence of the first value of said first shutdown signal.

**2.** A method according to claim 1, for a network element located at the top of a cascade of network elements according to the invention, **characterized in that** said first shutdown signal is carried by an Ethernet frame.

**3.** A method according to claim 1, **characterized in that** said first shutdown signal is constituted by a Power over Ethernet voltage usually used for remotely supplying power to network elements that can be remotely powered.

**4.** A method according to claim 3, **characterized in that** said second shutdown signal is constituted by a Power over Ethernet voltage usually used for remotely supplying power to network elements that can be remotely powered.

**5.** A method according to claim 3, **characterized in that** the first signal has its first value when a Power over Ethernet voltage is present; whereas the first signal has its second value when said Power over Ethernet voltage is absent.

**6.** A method according to claim 5, **characterized in that**, for propagating a shutdown signal via a given port of a first network element directly linked to a second downward network elements, it further comprises the steps of :
- determining whether a network element directly linked to a downlink port can be remotely shut down or not, by the presence of a Power over Ethernet voltage, and:
- putting on a PoE voltage on this downlink port when a PoE voltage is received on an uplink (38), and putting off the PoE voltage on this downlink port when no PoE voltage is received on an uplink (38), if the second downward network element can be shut down by the presence of a PoE voltage,
- or putting off the PoE voltage on this downlink port, when a PoE voltage is received on an uplink (38), and putting on the PoE voltage on this downlink port, when no PoE voltage is received on an uplink (38), if the second downward network element cannot be remotely shut down by the presence of a PoE voltage.

**7.** A method according to claim 1, **characterized in that** said first shutdown signal is carried by an optical carrier usually used for transmitting data from a first network element comprising an optical port to a second network element having an optical port.

**8.** A method according to claim 7, **characterized in that** the absence of a continuous optical carrier commands a shutdown of at least some functions of the second network element, and a propagation of the shutdown to a downward network element; whereas the presence of a continuous optical carrier authorizes an the functions of the second network element.

**9.** A method according to claim 7, **characterized in that** it further comprises the step of modulating the optical carrier with a modulating signal specific to the shutdown signal;
and **in that** the absence of this modulating signal while the optical carrier is present, commands a shutdown of at least some functions of the second network element, and a propagation of the shutdown to a downward network element; whereas the presence of this modulating signal authorizes all the functions of the second network element.

**10.** A method according to claim 1, **characterized in that** it further comprises the steps of:
- checking whether all the ports of a same network element are going to be shut down,
- and then shutting down all the functions of this network element if all the ports of this network element are going to be shut down.

**11.** A network element (37, 62) comprising:
- means (41; 61) for receiving, through an Ethernet network, a first binary shutdown signal,
means (39; 59) for detecting the value of said first shutdown signal,
means (39, 42; 59 42) for propagating the shutdown to a downward network element by generating a second shutdown signal, if the first shutdown signal has its first value;
**characterized in that** it further comprises means (39, 42; 59 42) for shutting down at least some functions of said network element, which comprise:
- means (42) for checking flags that have been previously assigned respectively to ports of said network element, the value of a flag authorizing or forbidding the shutdown of this port, and the propagation of the shutdown via this port,
- and means (42) for executing the shutting down and the propagation of the shutdown only for each port that has been assigned a flag authorizing the shutdown of this port, when said network element detects the presence of the first value of said shutdown signal.

**12.** A network element (37) according to claim 13, **characterized in that** said means for receiving a first shutdown signal comprise means for receiving an Ethernet frame, on an uplink (38).

**13.** A network element (37) according to claim 11, **characterized in that** said means for receiving a first shutdown signal comprise means for receiving, on an uplink (38), a Power over Ethernet voltage usually used for remotely supplying power to network elements that can be remotely powered.

**14.** A network element (62) according to claim 11, **characterized in that** said means (39, 42; 59 42) for propagating the shutdown to a downward network element comprise means (47) for generating a Power over Ethernet voltage usually used for remotely supplying power to network elements that can be remotely powered.

**15.** A network element (62) according to claim 11, **characterized in that** said means (39) for shutting down at least some functions of said network element and propagating the shutdown are activated if the Power over Ethernet voltage is present on said uplink,
and **in that** the means for authorizing all the functions of the network element are activated if the Power over Ethernet voltage is absent on said uplink.

**16.** A network element according to claim 15, **characterized in that** the means (47) for propagating the shutdown comprise:
- means for determining whether a network element directly linked to a downlink port can be remotely shut down or not, by the presence of a Power over Ethernet voltage,
- and means for:
-- putting on a PoE voltage on this downlink port when a PoE voltage is received on an uplink (38), and putting off the PoE voltage on this downlink port when no PoE voltage is received on an uplink (38), if the network element linked to this downlink port can be shut down by the presence of a PoE voltage,
-- putting off the PoE voltage on this downlink port, when a PoE voltage is received on an uplink (38), and putting on the PoE voltage on this downlink port, when no PoE voltage is received on an uplink (38), if the network element linked to this downlink port cannot be remotely shut down by the presence of a PoE voltage.

**17.** A network element (62) according to claim 11, **characterized in that** said means (61) for receiving a first shutdown signal comprise means for receiving an optical carrier usually used for transmitting data from an uplink network element to said network element.

**18.** A network element (62) according to claim 17, **characterized in that** said means (59, 42) for shutting down at least some functions of said network element and propagating the shutdown are activated if a continuous optical carrier is absent,
and **in that** the means for authorizing all the functions of the network element are activated if a continuous optical carrier is present.

**19.** A network element according to claim 17, **characterized in that** said means (59) for receiving a first shutdown signal comprise means for receiving an optical carrier modulated by a modulating signal specific to the shut down signal,
and **in that** said means (59, 42 for shutting down at least some functions of said network element and propagating the shutdown are activated if the modulating signal is absent, while the optical carrier is present,
and **in that** the means for authorizing all the functions of the network element are activated if the modulating signal is present.

**20.** A network element according to claim 19, **characterized in that** it further comprises:
- means (42; 52) for checking whether all the ports of said network element are going to be shut down,
- and means (42; 52) for shutting down all the functions of said network element if all the ports of a said network element are going to be shut down.
